# EUROPEAN PATENT SPECIFICATION

(11) **EP 1 568 287 B1**
(45) Date of publication and mention of the grant of the patent: **10.09.2008**
(21) Application number: 05250991.6
(22) Date of filing: 22.02.2005
(51) Int. Cl.: A23L 3/32, A23C 9/144, A23L 1/212

(54) **Method for acidifying and preserving food compositions using electrodialyzed compositions**
Verfahren für die Ansauerrung und die Konservierung von Lebensmitteln mit elektrodialysierten Zubereitungen
Méthode pour acidifier et conserver des compositions alimentaires en utilisant des compositions électrodialyzées

(30) Priority: 23.02.2004 US 784699
(43) Date of publication of application: 31.08.2005
(73) Proprietor: KRAFT FOODS HOLDINGS, INC., Northfield, Illinois 60093 (US)
(72) Inventor: Loh, Jimbay P., Illinois 60048 (US); Hong, Yeong-Ching Albert, Kildeer Illinois 60047 (US); Crowley, Colin P., Wheeling Illinois 60090 (US)
(74) Representative: Smaggasgale, Gillian Helen

(56) References cited:
- EP-A- 0 275 717
- WO-A-98/52422
- FR-A- 2 674 848
- US-A- 3 845 226
- US-A- 5 260 080
- US-A- 5 332 587
- CUPERUS F P ET AL: "APPLICATIONS OF MEMBRANE TECHNOLOGY TO FOOD PROCESSING" TRENDS IN FOOD SCIENCE AND TECHNOLOGY, ELSEVIER SCIENCE PUBLISHERS, GB, vol. 4, no. 9, September 1993 (1993-09), pages 277-282, XP009006437 ISSN: 0924-2244

## Description

The present invention is directed to methods for acidifying and preserving food products using electrodialyzed compositions. More specifically, electrodialyzed compositions having an acidic pH and free from objectionable flavor and taste are prepared using electrodialysis. Food products are contacted with the acidic electrodialyzed compositions to provide acidified or preserved food products having excellent organoleptic properties.

### BACKGROUND

The growing popularity of healthy foods and natural foods has greatly increased the use of more natural methods of preserving food without use of the chemical food preservatives.
Most common food poisoning and spoilage problems are caused by unwanted growth of bacteria, yeasts and molds. The addition of food acidulants (such as lactic acid and vinegar) to inhibit the growth of microbes which are harmful to man or animals is known. However, the direct addition of food acidulants inevitably leads to significant (often negative) alteration in flavor and taste to food products.

Shelf stable vegetables generally experience lose of flavor, crispness, texture, fresh appearance, color, and/or other organoleptic properties. Conventional preservation processes (e.g., canning and the like) typically involve multiple heat treatment steps and/or a combination of heat treatment with other destructive processing steps to preserve the vegetables. Other conventional methods (e.g. pickling, infusion, conventional acidification, and the like) typically use high levels of preservations (e.g. salt, humectants, potassium sorbate, acidulants and the like) and introduce undesirable flavor and taste. Generally the accumulative effects of these preservation methods results in reduced quality. Therefore, an improved method of preserving fresh (e.g. vegetables) and prepared foods (e.g. cooked pasta) is needed to provide high organoleptic quality and required shelf stability.

EP 275717 discloses a ready-to-eat pasta product, and process for making the same. The pasta product is storable for extended periods of time. The pasta product is formed by blanching dry pasta in a heated acidic aqueous solution, rinsing the blanched pasta, and then dipping the pasta in a cooler acidic aqueous solution. The pasta product is then stored in a sauce such that the equilibrated pH is between about 3.8 to 4.3.

WO 98/52422 discloses a method of pre-processing food prior to a main food preservation process, comprising subjecting the food to a treatment which serves to decrease the viability of any microorganisms in the food. Preferably, the treatment involves blanching the food in an acid solution or mixing an acid into the food. WO 98/52422 also discloses a method of preserving food, comprising the steps of: (1) subjecting the food to a treatment which serves to decrease the viability of any microorganisms in the food; and (2) subjecting the food to heat in a food preservation process.

FR 2674848 discloses a process for converting a residue containing a lactate, for example ammonium, sodium or potassium lactate, arising from the manufacture of lactic ferments to a lactic acid concentrate. The process comprises the steps of (a) replacing the cations combined with the lactate present in the said residue with H+ ions and (b) concentrating the residue obtained in (a) to a lactic acid concentration of at least 5% by weight. The concentrate obtained is useful in the food industry for reducing pH and/or for activating micro-organisms.

US5260080 discloses a process in which skimmed milk is subjected to acidification by electrodialysis in one or two successive three-compartment electrodialyzers. The resulting milk is at a pH of 4.5 or 2.8. Milk at a pH of 4.5 may be used for obtaining refined casein as a substitute for rennin casein. Milk at a pH of 2.8 when sterilized and filtered to selectively extract a whey permeate and serum proteins becomes casein in its natural state soluble at a pH in the range 2.8 to 4, which casein may be neutralized in a two-compartment electrodialyzer. The acid permeate is passed over a strong cationic resin in order to be used as an acid agent in the initial electrodialyzers.

### SUMMARY

The present invention is directed to methods that use electrodialyzed (ED) compositions to produce acidified foods and foods having increased shelf life. The use of ED compositions in foods is effective for lowering the pH of the foods and does not require the addition of food acidulant for pH adjustment. Since undesirable flavors and tastes are not introduced with the ED composition and no preservatives are used, the resulting preserved foods have exceptional organoleptic quality.

Preservation of food products is achieved by contacting food products with ED compositions. Shelf lives of at least about 6 months under ambient storage conditions can be obtained without the need of using food acidulants, preservatives and/or extensive thermal processing (such as retorting) for preservation purpose. More specifically, a preserved food product is prepared by contacting a food product with an amount of an ED composition effective for forming an acidified food product, wherein the amount of ED composition is sufficient to achieve a pH of about 4.6 or less, preferably about 4.2 or less, in the shelf stable food products under ambient storage conditions. Food products which may be preserved include vegetables, beans, meat, potato, rice, pasta, and mixtures as well as prepared foods such as beverages, desserts, syrups, dressings, sauces, gravies, dips, spreads, cereal products and baked goods containing the ED composition. The amount of ED composition used is determined by the buffering capacity of the foods, the pH of the ED composition, target pH of the final products and processing conditions (such as contact time and temperature).

ED composition are generated using membrane electrodialysis and have a total cation concentration of about 1.0N or less, an individual cation concentration of about 0.6N or less, a free chlorine content of about 1 ppm or less, and a pH of about 4.6 or less. In an important aspect, the ED compositions have a total cation concentration of about 0.5N or less, preferably about 0.1N or less, an individual cation concentration of about 0.3N or less, preferably about 0.04N or less, a free chlorine content of about 1 ppm or less, and a pH of about 3.5 or less.

In another aspect, preserved food products are prepared using a method that includes (1) contacting a food product with an amount of ED composition effective for obtaining an acidified food product, wherein the amount is sufficient to achieve a pH of 4.6 or less and preferably about 4.2 or less in the food products to be stored under ambient temperature; (2) placing the acidified food product in a heat-stable, sealable container; (3) sealing the container; (4) thermally treating the food product in the sealed container at a temperature and for a time effective to pasteurize the food product; (5) cooling the thermally treated food product to rapidly reduce the temperature to 25°C or less to obtain the preserved food product. Acidified foods may also be heated to a temperature sufficient to pasteurize the container while being hot-filled into the container, thus allowing the omission of step (4) and (5). Food products which may be preserved include vegetables, beans, meat, potato, rice, pasta, and mixtures thereof, as well as prepared foods containing ED compositions including beverages, desserts, dressings, sauces, gravies, dips, spreads, snacks and cereal and baked goods. Heat-stable, sealable containers that may be used include a glass jar, plastic pouch and the like. Other conventional methods of acidifying food products with an acidic medium are well known in the art and described in 21 Code of Federal Regulations section 114.80 under "Process and Control" of "Acidified Foods". The present invention also discloses additional, but more efficient, methods of preparing acidified foods with improved product quality.

In another aspect, preserved food products are prepared using an in-package acidification and pasteurization method that includes (1) placing a food product in a sealable, heat stable container; (2) adding an amount of electrodialyzed composition to the container, wherein the amount is sufficient to achieve a pH of about 4.6 or less, preferably about 4.2 or less in food products to be stored under ambient conditions; (3) sealing the container; (4) thermally treating the food product in the sealed container at a temperature and for a time effective to pasteurize the food product; (5) cooling the thermally treated food product to rapidly reduce the temperature to about 25 °C or less to obtain the preserved food product. The food product placed in the sealable, heat stable container may be raw or partially cooked (e.g. pre-blanched vegetables), and the sealable, heat stable container may be a plastic pouch.

Vegetables may include carrots, peppers, broccoli, peas, pea-pods, cauliflower, onions, tomatoes, mushrooms, zucchini, corn, celery, asparagus, green beans, water chestnuts, and bamboo shoots. Food products may be cleaned or pretreated to reduce an initial microbiological load (e.g. rinsing with chlorinated water). When cooked, the vegetables have appearance, texture, and taste superior to that provided by high quality frozen vegetables.

In another aspect, preserved vegetables are provided by a method that includes (1) pretreating raw vegetables in order to reduce an initial microbiological load; (2) placing the pretreated raw vegetables in a sealable, heat stable plastic pouch; (3) adding an amount of electrodialyzed composition to the container, wherein the amount is sufficient to achieve a pH of 4.6 or less, preferably 4.2 or less, in the preserved vegetables; (4) sealing the container; (5) thermally treating the vegetables in the sealed container at a temperature and for a time effective to pasteurize the vegetables; (6) cooling the thermally treated vegetables to rapidly reduce the temperature to about 25°C or less to obtain the preserved vegetables.

In another aspect, an acidified food product is provided by contacting the food with a countercurrent stream of ED composition having a pH of about 4.5 or less, preferably 4.2 or less, for a total contact time of at least about 30 seconds at a temperature of about 1 to about 100°C. The ED composition having a total cation concentration of about 1.0N or less, preferably about 0.5N or less, and most preferably about 0.1N or less, an individual cation concentration of about 0.6N or less, preferably about 0.3N or less, and most preferably about 0.04N or less, a free chlorine content of about 1 ppm or less, and a pH of 4.5 or less, preferably 3.5 or less. Similarly, contacting of ED compositions and food products may be achieved by dipping or soaking food products in a series of vessels containing ED compositions with increasing acidity for better utilization of the acidifying power of the ED compositions.

In another important aspect, the ED composition is useful for the preservation of formulated foods. More specifically, ED composition maybe formulated into a prepared food such as beverages, desserts, dressings, sauces, gravies, dips, spreads and snacks by direct or partial replacement of the water normally present in the formula sufficient in achieving a final pH of about 4.6 or less, preferably abut 4.2 or less. The formulated food product is then hot-filled into a heat stable container or placed into a container to which heat is applied in an amount effective to pasteurize the food product.

Generally, shelf stable formulated food products are prepared using a method that includes (1) incorporating an amount of ED composition in a formulated food that is effective for obtaining an acidified food product, wherein the amount is sufficient to achieve a pH of about 4.6 or less, preferably 4.2 or less; (2) placing the acidified food product in a heat-stable sealable container; (3) sealing the container; (4) thermally treating the food product in the sealed container at a temperature and for a time effective to pasteurize the food product; (5) cooling the thermally treated food product to rapidly reduce the temperature to about 25°C or less to obtain the preserved food product. Said formulated food product may also be heated to a temperature sufficient to pasteurize the container while being hot-filled into the container, thus allowing the omission of steps (4) and (5). Formulated food products which may be preserved include beverages, desserts, dressings, sauces, gravies, dips, spreads, snacks, pasta, cereal and baked goods.

In another aspect, a method is provided for preparing preserved food products having at least one solid and one fluid component. The method includes (1) separately pretreating either one or all components with an amount of ED composition sufficient to achieve a pH of about 4.6 or less, preferably about 4.2 or less in the final, combined, preserved food products; (2) placing the pretreated components in a sealable, heat stable container; (4) sealing the container; (5) thermally treating the sealed container at a temperature and for a time effective to pasteurize the combined food products; (6) cooling the thermally treated vegetables to reduce the temperature to about 25°C or less to obtain the preserved food products

In another aspect, a method is provided for preparing preserved pasta using an in-package process. The method includes (1) combining dry pasta with an ED composition having a temperature of about 70 °C or greater, preferably 90°C or greater in a heat stable, heat sealable container, the ED composition effective for achieving a final, equilibrium pH of the preserved pasta of about 4.6 or less, preferably about 4.2 or less;. (2) sealing the filled container; (3) thermally treating the sealed container at a temperature of 70 °C or greater; (4) mixing for about 2 minutes or more, the mixing effective for providing a uniform distribution of the electrodialysis composition in the pasta; (4) cooling the thermally treated pasta to reduce the temperature to about 25°C or less to obtain the preserved pasta. In this aspect, the ratio of dry pasta to ED composition is about 0.70 or greater, preferably about 0.8 or greater.

### BRIEF DESCRIPTION OF THE DRAWING

FIG. 1 is one example of a membrane electrodialysis system for decreasing pH.
FIG. 2 is another example of a membrane electrodialysis system for decreasing pH.
FIG. 3 shows a process for in-package processing of pasta.
FIG. 4 illustrates a counter current acidification process.

### DETAILED DESCRIPTION

ED compositions may be used in the preparation a wide variety of shelf-stable food products. As used "shelf stable food products" means the preserved food products stored under ambient conditions is safe for consumption. "Shelf-life" means shelf life under ambient storage conditions.

Food products which may be prepared using ED compositions include meat, potato, rice, pasta, and the like, as well as mixtures thereof. The vegetables that may be used include, but are not limited to, green, yellow, orange, and/or red vegetables. Such vegetables include, for example, carrots, various types of peppers, broccoli, various types of peas and pea-pods, cauliflower, onions, tomatoes, mushrooms, zucchini, corn, celery, asparagus, green beans, water chestnuts, bamboo shoots, and the like. Generally, the vegetables are first cut into appropriate sizes (generally pieces of ½ inch or less in their longest dimension); larger pieces can be used, if desired. Of course, smaller vegetables such as peas and pea-pods can be, and preferably are, used whole without any reduction in size. Both frozen (especially the individually frozen type) vegetables and fresh vegetables can be used. Preferably fresh vegetables are used since they provide the highest quality in the final product. Generally, blanching of the vegetables prior to contact with ED compositions should be avoided, if possible, since this additional thermal exposure can result in lose of quality. If blanching is used, it may be done in water or in ED compositions. Likewise, fresh vegetables should be processed in the present invention as quickly as is reasonable in order to minimize enzymatic degradation. Examples of cooked meat products which may be used include, but are not limited to, beef, pork, poultry, seafood, and the like.

Food products may be contacted or combined with ED compositions and/or food products may be prepared using ED compositions. One way of "contacting" or "combining" a food product includes placing food products into an ED composition, either for storage and/or cooking. ED compositions may also be contacted with food products for some predetermined amount of time and then removed from contact with the ED composition.

ED compositions are especially useful in the preparation of starches and pastas. Examples of pasta which may be packaged using the methods of this invention include, but are not limited to, macaroni, spaghetti, and the like. Starches may include pasta, rice, potato products such as IQF, cubes, slices, whole, fries, mashed, fried, dumpling by way of nonlimiting example and mixtures thereof. "Pasta" herein can also include noodles and egg noodles of any size and shape. Noodles or egg noodles are pasta products further comprising eggs. By "noodle" or "pasta noodle" herein is meant food prepared by drying formed units of dough made from semolina, durum flour, farina flour, or any combination of two or more of these, with liquid eggs, frozen eggs, dried eggs, egg yolks, frozen yolks, dried yolks or any combination of two or more of these, with or without water. Dry pasta is pasta having a moisture content of less than about 15%. Uncooked fresh pasta may be used as well as filled pasta such as ravioli.

"Food acidulants" refer to FDA-approved acids (mainly organic acids) including lactic acid, citric acid, phosphoric acid, fumaric acid, malic acid, tartaric acid, acetic acid, gluconic acid, adipic acid, and mixtures thereof. Food acidulants are not required when using ED compositions. Hence, less than about 1% of the total food acidulants are found in the preserved food products of the present invention. Total food acidulants may be determined using an ion chromatopographic method such as by Alcazar et al. [Talanta (2003), 61(2), 95-101] of food grade acid are used. In another aspect, ED compositions may be used to provide a desired pH range, and a small amount of food acidulant (to provide full taste profile) may be included in the final food product.

FDA-approved food acidulants can lower the pH of a food product. Since ED compositions may be used as primary acidifying agents, the content of total food acidulants in acidified foods at a given pH e.g. <4.2 may be used to indicate if the low pH is achieved by acidulants or not. In this aspect, the total food acidulants in preserved food products with a pH of less than 4.6 is 1 weight percent or less where the food acidulant includes at least one food acidulant selected from the group consisting of acetic acid, adipic acid, citric acid, fumaric acid, gluconic acid, lactic acid, malic acid, tartaric acid and phosphoric acid. The total food acidulant concentration includes the sum of all of the other acidulants that might be approved for food use in the future.

At the same product pH, use of ED compositions provides food products with the same microbiological stability as conventional food acids or acidulants. As used herein "microbiological stability" means products that are processed and packaged to be commercially sterile. Commercial stability is defined by the FDA as the product pH, condition achieved by application of heat, or other appropriate treatment that renders the product and container free of viable microorganisms having public health significance, as well as microorganisms of non-health significance, capable of reproducing in the food under the normal non-refrigerated or ambient conditions in which the food is stored, distributed, retailed and held by the user.

### Preparation of ED Compositions

**Aqueous Solution**. Aqueous feed solutions which may be treated with the ED method include any mineral or ion rich aqueous solution obtainable from natural water sources such as spring water, well water, municipal water, and/or artificially ion enriched water free from contamination and excessive chlorination (for example greater than about 2 ppm). An aqueous feed solution for ED treatment should have a total cation concentration of about 0.0001N to about 1.8N which is effective for providing an initial conductivity of about 0.1 to about 200 mS/cm. As used herein, "total cation concentration" or "individual cation concentration" means any cation (such as Na⁺, K⁺, Ca⁺⁺, Mg⁺⁺) concentration excluding hydrogen ions. Ion concentrations may be determined using techniques known in the art, such as for example inductive coupled plasma atomic emission spectroscopy for selected.

In an important aspect, the aqueous feed solution to be treated with ED may have a total cation concentration of about 0.002N to about 1.0N which is effective for providing an initial conductivity of about 1.0 to about 30 mS/cm. For example, the aqueous solution to be treated with ED may include at least one of the following:

| Cations: | Concentration (N) |
|---|---|
| calcium | 0-0.2 |
| magnesium | 0-0.002 |
| potassium | 0-0.01 |
| sodium | 0-1.7 |

| Anions: | |
|---|---|
| bicarbonate | 0-0.07 |
| chloride | 0-1.7 |
| sulfate | 0-0.01 |

Other non-toxic, edible ions may also be included.

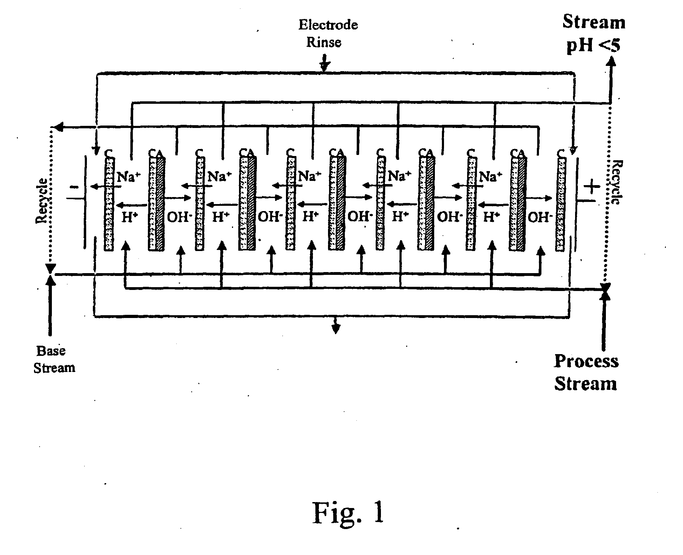

**Membrane Electrodialysis**. As shown in Figure 1, membrane electrodialysis may be conducted using a bipolar membrane and cationic membranes. The membranes are disposed between a cathode and anode and subjected to an electrical field. The membranes form separate compartments and materials flowing through those compartments may be collected separately. An example of an electrodialysis apparatus containing ion-selective membranes is EUR6 (available from Eurodia Industrie, Wissous, France). Suitable membranes are available from Tokuyama (Japan). A bipolar membrane includes a cationic membrane and an anionic membrane joined together.

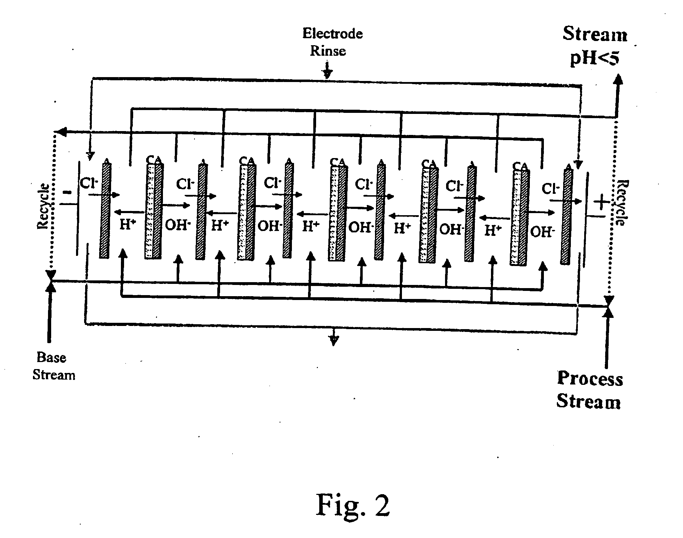

In accordance with one aspect, an aqueous solution is contacted with the ion-selective membranes. Aqueous solutions may be processed in a batch mode, semi-continuous mode, or continuously by flowing an aqueous solution over the ion-selective membranes. When using batch, semi-continuous mode, or continuous processing, an electrical potential is applied across the anode and cathode for a time effective for providing an ED composition with the desired pH and ion concentrations. Processing times in a batch mode and flow rates in a semi-continuous mode or continuous mode are a function of the number of ion-selective membranes that are used and the amount of electrical potential applied. Hence, the resulting ED composition can be monitored and further processed until a desired pH and ion concentration is achieved. An alternative membrane configuration is provided in Figure 2. Certain variations in membrane configuration are expected to achieve the same results.

As shown in Figure 1 and 2, the pH of the aqueous solution may be adjusted to a pH range of about 0 to about 7 by contacting the aqueous solution with at least one, preferably a plurality of bipolar membranes that includes cationic membranes on both sides of the bipolar membrane. Materials from the compartments closest to the cathode are collected for subsequent use. Materials collected from the compartments closest to the anode may be recirculated back through the membranes or circulated to a second membrane electrodialysis as many times as needed to provide an ED composition having a pH of about 0 to about 7, preferably, about 1 to about 5. Materials from the compartment closest to the cathode may also be recirculated back through the membranes.

**Electrodialyzed Composition**. After treatment with membrane electrodialysis, the ED composition has a total cation concentration of less than about 1.0N, and a concentration of any individual ion of less than about 0.6N with a free chlorine content of less than 1 ppm. In a preferred embodiment, the ED composition has a total cation concentration of less than about 0.1N and an individual cation concentration of less than 0.04N. For example, the ED composition may contain the at least of the following:

| | Concentration (N) |
|---|---|
| **Cations:** | |
| calcium | 0-0.1 |
| magnesium | 0-0.001 |
| potassium | 0-0.005 |
| sodium | 0-0.9 |

| **Anions:** | |
|---|---|
| bicarbonate | 0-0.04 |
| chloride | 0-0.9 |
| sulfate | 0-0.005 |

Other non-toxic, edible ions may also present limited mainly by the taste impact of the individual ions.

After treatment with membrane electrodialysis, ED compositions will have a pH ranging from about 0 to about 14; for acidic post-ED compositions, preferably from about 1 to about 5. Treated solutions do not have objectionable tastes and/or odors.

### Processing of Food Products

The present invention provides a simple and cost effective process for the preservation of food products with improved flavor and taste over conventionally acidified food products. Solid foods such as vegetables, dry pasta, rice, beans and the like are first made in contact with ED composition of known pH in a sufficient amount effective to achieve the target pH of the final preserved food products in manners or with methods known to the art in food technology. These commonly used methods of contacting food products with an acidic medium are described in , but not limited to, 21 CFR section 114.80 under "Processes and Controls" of "Acidified Foods"; These methods include (1) blanching food products directly in acidic medium, (2) immersion of blanched food products in acidic medium, (3) batch acidification of food products in acidic medium, (4) direct addition of acidic medium into containers with food products and (5) addition of acidifying agent(s) as part of the food formulation. The present invention discloses improved, more efficient methods of preparing shelf stable, acidified food products.

The acidified products may be placed in a heat stable, heat sealable container. The container is sealed and heat treatment effective to pasteurize the food products is applied.
Rapid cooling is generally preferred after heat treatment. The preserved food products have a pH of less than about 4.6, preferably less than about 4.2, which, when stored under ambient conditions, maintain their quality for at least 6 months and generally on the order of about 9 to about 12 months. A predetermined amount of ED composition of known pH is used at a temperature of above 0°C, preferably above 70°C is added and most preferably above 85°C. Alternatively, hot, acidified food products with a temperature of above 70°C can be hot-filled directly into the container. The container is sealed and the sealed container is held for at least 1 minute to pasteurize the food products without further thermal treatment.

In one embodiment, the present invention provides a very simple and very cost effective process for the preservation of food products with improved flavor and taste over conventionally acidified food products. The present invention also provides minimal thermal exposure of the food products thus improving the product flavor, color, and texture, specifically by blanching, cooking, acidifying and pasteurizing the food product simultaneously in its container and in one single step. Especially for vegetable-containing food products, the present invention also provides for elimination of other quality-degrading treatments such as freezing, drying, retorting, canning, and the like to produce very high quality vegetable-containing food products which approach, and in some cases, exceed the quality of their IQF counterparts. Additionally, the process of this invention provides packaged food products with a pH of less than about 4.6, preferably less than about 4.2, which, when stored under ambient conditions, maintain their quality for at least about 6 months and generally on the order of about 9 to about 12 months.

For example, clean, cut, raw vegetables are first placed in the heat stable, heat sealable container. A predetermined amount of ED composition of known pH and at a temperature of above 70°C and most preferably above 90°C is added. The amount and pH of the ED composition is sufficient to achieve the target pH of the final products (i.e. less than about 4.6 and preferably less than about 4.2). The container is sealed immediately and the food product rapidly heated to a temperature of about 70°C or higher for a time effective to blanch, cook, acidify and pasteurize the food product simultaneously. Mixing (such as gently tumbling the sealed container) is preferred during the heat treatment to ensure uniform distribution of the ED composition within the container and through out the food products. Rapid cooling is generally preferred after the heat treatment.

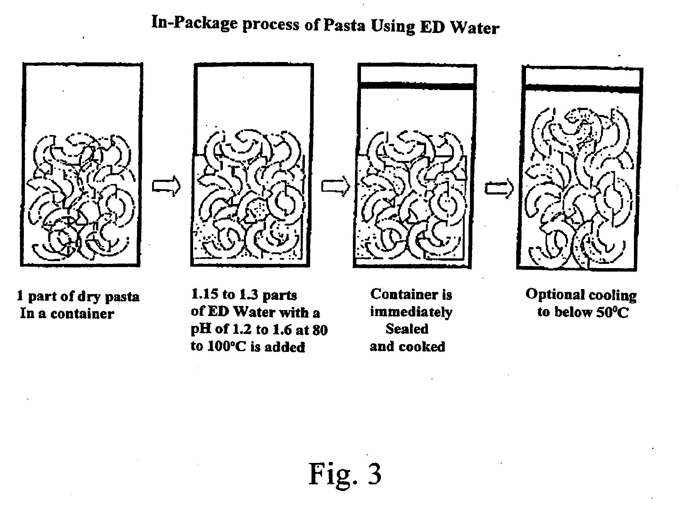

In one aspect, by combining the use of ED compositions and in-package processes, the present invention also provides a very simple and very cost effective process for the preservation of starch products such as pasta, rice, and the like with improved quality (such as reduced sour taste). A general process for in-package processing of pasta is shown in Figure 3. A predetermined amount of food product (dry pasta) and ED composition of known pH is first placed in a heat stable, heat sealable container effective to achieve a final, equilibrium pH of the preserved food products of less than about 4.6, more preferred less than about 4.2. It is important that the ratio of food products to ED composition is fixed to ensure optimum moisture content of the preserved food products. For example, the ratio of dry pasta and ED composition is typically greater than about 0.70 and more preferably greater than about 0.80. The temperature of the ED composition should be above 70°C and more preferably above 90°C. Continuous mixing (such as gently tumbling the sealed container) is necessary during the heat treatment to ensure uniform distribution of the ED composition within the container and throughout the food products. Rapid cooling is generally preferred after the heat treatment. Since cooking, acidification and pasteurization occur simultaneously, over-processing is avoided. In addition, as the ED composition and the ratio between food products and the ED composition are predetermined, the resulting acidified foods (such as preserved pasta) after reheating always have the desired moisture content or optimum texture.

In another important aspect, the ED composition is useful for the preservation of formulated foods. More specifically, the ED composition may be formulated into a food product by complete or partial substitution for the water normally present in the formula. Shelf stable formulated food products such as beverages, desserts, dressings, sauces, gravies, dips, spreads, snacks, pasta, cereal and baked goods are prepared by directly incorporating an amount of ED composition of predetermined pH into a food formula effective for obtaining an acidified food product, wherein the amount is sufficient to achieve a final product pH of less than 4.6 and preferably less than about 4.2. The acidified food product is then placed in a heat-stable, sealable container. The container is sealed followed by thermally treating the food product in the sealed container at a temperature and for a time effective to pasteurize the food product. The required pasteurization step may be achieved by a simple hot fill of the acidified food product into the container. Cooling of the thermally treated food product to reduce the temperature to below about 25°C is generally desirable. The preserved food products have no objectionable sour taste or off-flavors commonly associated with the use of food acidulants and are stable under ambient conditions for at least 6 months but generally in the order of 9 to 12 months.

In another aspect, the present invention, especially in conjunction with the use of in-package processing, may be used to preserve food products comprising solid food pieces (such as vegetables, meat, beans and the like) and a fluid or liquid component (such as sauce, dressing, gravy and the like). The liquid component contains a predetermined amount of ED composition effective in achieving a pH of the final product including both solid and fluid components, after processing and equilibration, of less than about 4.6 and preferably less than about 4.2.

Preferably, the food products of this invention are contained in a heat stable, sealable plastic pouch such that the food products can be pasteurized directly in the pouch and later heated or cooked directly in the pouch (e.g., in a boiling water bath or in a microwave oven) by the ultimate consumer. Indeed, one of the advantages of the present invention is that food products prepared by the process of this invention can be consumed directly from the pouch as snacks (e.g. for vegetables, meats) or heated or cooked alone or with other ingredients as desired (e.g. with pasta) by the consumer to provide the taste, texture, and appearance of a freshly prepared meal. The food products of the present invention can be heated or cooked in the original container (e.g., pouch) or removed form the original container for heating or cooking alone or in combination with other ingredients.

In one aspect, blanching, cooking, acidification and pasteurization are conducted in separate process steps. The desired food products, preferably wherein the individual components are cut to the desired size, are combined with an ED composition. The pH of the ED composition is such that the pH of the preserved food product is less than about 4.6 and preferably less than about 4.2. Generally the pH of the ED composition will be less than about 4.5 and preferably about less than 3.5. The acidified food product is then subjected to thermal treatment. The thermal treatment can be effected by the temperature of the ED composition being in the range of about 70 °C to about 100°C and preferably about 90°C to about 100°C. Alternatively, the thermal treatment may be effected by heating the food product and ED composition to a similar temperature. In any event, the thermal treatment is continued until the target pH is reached and is less than about 4.6 and preferably less than about 4.2and will generally be in the order of about 2 to about 15 minutes. For heat sensitive products such as certain vegetables (e.g. bell pepper), lower thermal exposure and/or lower pHs (so long as the final or equilibrium pH of the preserved food product is less than about 4.6 and preferably less than about 4.2) can be used to improve product quality by minimizing thermal exposure. After draining any excess hot ED composition, the treated food product may be optionally rinsed with a cold ED composition (generally of similar composition to the original ED composition) to reduce the temperature to below about 25 °C. The so-treated food product is then sealed in a heat stable container and then pasteurized. The container may, if desired, be sealed in a manner so as to at least reduce oxygen levels in the container (e.g., vacuum packing, inert atmosphere, and the like) in order to provide additional protection against oxidative flavor deterioration. The sealed container is further pasteurized and is effected by thermally treating the food product to effectively raise the temperature of the food product to at least about 70°C for at least one minute (or equivalent pasteurization conditions). Generally, pasteurization can be carried out by heating the sealed container in a hot water bath at about 70 to about 100°C for about 1 to about 30 minutes, and more preferably at about 90 to about 100°C for about 1 to about 10 minutes. After pasteurization, the food product is rapidly cooled to below about 25 °C within about 10 minutes and then stored under ambient conditions.

In another aspect, acidification and pasteurization along with hydration (e. g. of pasta), blanching and cooking are conducted at essentially the same time in order to minimize total thermal exposure of the food product such is in the case of in-package processing. The desired food products, preferably wherein the individual components are cut to the desired size, are combined with an ED composition at the desired ratio (i.e., sufficient acidifying power to provide the desired pH in the final preserved product). The food product and ED composition may be combined in a separate step and then placed in the desired heat stable container or added or combined directly in the desired heat stable container. The pH of the ED composition is such that the pH of the final preserved food product is less than about 4.6 and preferably less than about 4.2. Generally the pH of the ED composition will be less than about 4.5 and preferably less than about 3.5. The temperature of the ED composition should be above 0°C, and preferably above 70°C and more preferably above about 90°C to minimize the thermal treatment time for heat sensitive products (e.g. vegetables) or to accelerate hydration and cooking process of starch products (e.g. pasta). Optional ingredients can be added to the treated food product via the acid solution or at any time before sealing the container. The food product and ED composition, along with any added optional ingredients, are sealed in the heat stable container and then pasteurized.

The ED compositions used to contact food products may also contain other optional ingredients or components such as, for example, salts, sweeteners, emulsifiers, thickeners, spices, flavorants, colorants, preservatives, nutrients, vitamins, minerals, antioxidants, botanicals, nutraceutical additives, and the like so long as they do not adversely effect the organoleptic and/or stability properties in a significant manner. Thus, the ED composition may be a low viscosity solution, a low viscosity marinade, a medium or high viscosity sauce, and the like. Suitable salts include, for example, sodium chloride as well as other common salts (e.g., calcium chloride, potassium chloride, and the like) which may be added for purposes other than providing a "salty taste." Suitable natural and artificial sweeteners include, for example sucrose, fructose, corn syrup, acesulfame K, sucralose, and the like. Suitable thickeners and gelling agents include, for example, gums and starches. Suitable oils include edible flavored or unflavored oils. Oxidative stable vegetable oils (e.g., olive oil, canola oil, and the like) are preferred. Emulsifiers (e.g., lecithin) may be included to enhance mouthfeel or reduce sticking. Suitable vitamins that may be included in the acid solution include, for example, vitamin A, vitamin C, vitamin D, vitamin E, B vitamins, niacin, folate, folic acid, and the like as well as mixtures thereof. Suitable minerals include, for example, salts of metal nutrients, wherein the metals are chosen from among calcium, magnesium, copper, iron, zinc, chromium, and the like as well as mixtures thereof; salts of inorganic minerals such as, for example, phosphate, sulfate, chloride, and the like as well as mixtures thereof can also be used. Suitable antioxidants include, for example propyl gallate, octyl gallate, dodecyl gallate, butylated hydroxyanisole, butylated hydroxytoluene, and the like as well as mixtures thereof. Suitable botanicals include, for example St. John's wort, ginseng, ginkgo biloba, and the like as well as mixtures thereof. Of course, as those skilled in the art will realize, other vitamins, minerals, antioxidants, and botanticals can also be used in the present invention. The amount of such optional ingredients can, of course, vary considerably depending on the specific nutrient or mineral added (and its recommended daily requirement) and the targeted consumer. For example, macronutrients (e.g., calcium) can be added at relatively high levels (i.e., up to about 5 percent) whereas other trace minerals, vitamins, and other additives (i.e., generally materials having daily adult requirements in the milligram range or lower) will normally be added at much lower levels.

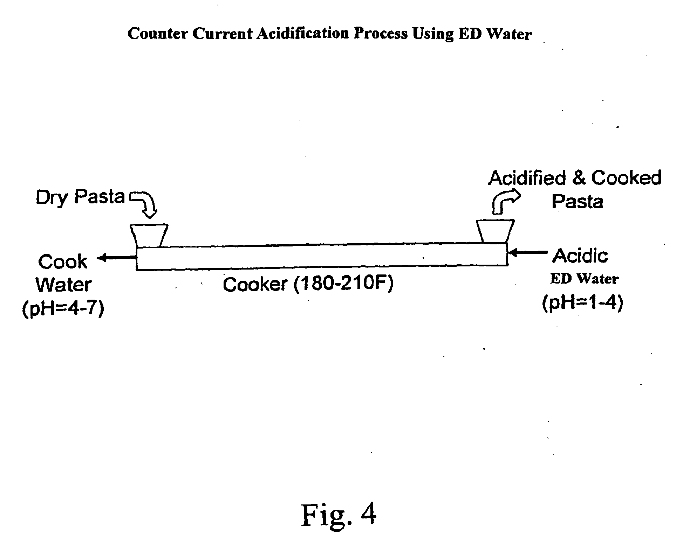

As shown in Figure 4, food (e.g. vegetables, pasta) products may be acidified or preserved using a continuous countercurrent process. In this process, a food product, such as pasta, enters a cooker which can maintain a temperature of about 70 to about 100°C, preferably 90 to 100°C. A food product is typically fed into one end of the cooker at a rate corresponding to the time required to acidify and/ or cook the product which is generally in a range of about 30 seconds to about 30 minutes. An ED composition (pH of about 1 to about 4.5) is flowed into the cooker from the other end of the cooker in a countercurrent fashion or in an opposite direction of the food product at a rate determined by the combined effects of treatment temperature/ time, ED composition (e.g. pH), the ratio of food product to ED composition in the cooker, type and geometry (i.e. size and shape) of the food products. Acidified and cooked food products are removed from the cooker from where the low pH ED composition entered the cooker and cook water (i.e. spent ED composition with a pH typically greater than about 5 is removed from the opposite end of the cooker.

The following examples illustrate methods for carrying out the invention and should be understood to be illustrative of the invention which is defined in the appended claims.

### EXAMPLES

### EXAMPLE I

An acidic aqueous ED composition was prepared by using ED equipped with a cationic monopolar-bipolar-cationic monopolar membrane configuration as described in Figure 2. 8 L of solution was processed using 6.1 V/cell with 1000 A/m² electrical potential for 67 minutes until pH 1.7 was achieved. Ion profiles of the feed (pre-ED) aqueous solution and the treated (post-ED) aqueous solution are given in the table below.

| | Ion Concentration (mN) | |
|---|---|---|
| | Pre-ED | Post-ED |
| Calcium | 11.97 | 0.50 |
| Magnesium | 0.30 | < 0.01 |
| Potassium | 6.93 | 2.42 |
| Sodium | 17.75 | 0.47 |
| Chloride | 17.54 | 17.54 |
| Sulfate | 9.37 | 9.37 |
| **pH** | **7.79** | **1.67** |
| Total cations | 36.95 | 3.39 |

The treated, acidic aqueous solution has no objectionable odor. When diluted with deionized water to pH of 3.25, the resulting mixture is practically tasteless.

### EXAMPLE II

One part of freshly cut red bell pepper (RBP) of about 0.5" to about 0.5" and 0.55 to 0.65 parts ED composition of pH 1.5 were placed in a heat-stable, heat-sealable flexible pouch. The pouch was sealed and submerged in water (about 210°F) for about 3 minutes with occasional flipping to insure uniform distribution of the ED composition. The pouch was cooled after heating at 40°F. The resulting RBP has a final, equilibrium pH of about 3.7 to 3.9. The RBP had crisp texture and had no objectionable sour taste and was stable under ambient storage conditions at 20°C.

### EXAMPLE III

IQF cut corn (USDA Grade B) was mixed with 1.0, 1.1, 1.2 or 1.3 parts ED composition (pH 1.56) and heated in a heat stable plastic pouch to near-boiling in a microwave oven followed by continuous heating in a water bath (about 90 to about 100°C) for five additional minutes after sealing the pouch. The samples were cooled in cold water and compared with samples conventionally prepared using lactic acid (pH 3.95) in a taste test (n=6). Tasters unanimously found that all samples prepared with ED composition were significantly more preferable due to the drastically reduced sour taste commonly associated with conventionally acidified corn. The equilibrium pH of the samples prepared with ED water was 4.18, 4.00, 3.87 and 3.67 respectively.

### EXAMPLE IV

One part dry rotini was cooked in 5.8 parts ED composition (pH 1.94) at about 95-100°C for exactly 14 minutes. Cooked pasta was hot packed in a plastic pouch and cooled in a refrigerator for about 12 hours. The resulting sample (pH 3.9 to 4.0) after reheating in a microwave oven was tested against a control (commercial shelf stable, lactic acid acidified rotini with pH 3.9 to 4.0) with and without cheese sauce. Samples prepared with the ED composition were judged by at least seven expert testers and found unanimously to be free from objectionable sour taste with and without cheese sauce. Similar tests using pasta acidified by lactic acid showed that, at comparable pH (pH 2.5-3.5), the sample treated with lactic acid was extremely acrid and unacceptable as compared to the sample acidified with ED composition.

### EXAMPLE V

High quality, shelf stable, low pH (<4.2) meat was made by first par-cooking raw meat (chicken breast) to a desirable doneness or at least to obtain a fully cooked appearance. For example, a piece of chicken breast (425 gm) was cut into slices of about ¼" in thickness and cooked in boiling water for about 30 seconds. Cooked slices were transferred into a glass jar containing 2X (by weight of cooked chicken) ED water at pH of 1.29. The content and glass jar was microwaved to bring to a boil. The jar was sealed then allowed to cool at and to room temperature. After 48 hours, the pH of cooked slice was determined to be 4.16. The treated chicken breast was tasted as-is without any seasoning by a small expert panel. Results indicate that the sample had normal chicken flavor and appearance with unexpected tender texture. Most importantly, no objectionable sour taste was found. '

### EXAMPLE VI

This experiment demonstrated that reduced use of ED composition can be achieved by using multiple stage acidification processes or continuous countercurrent processes. Dry rotini was cooked in 4 parts of spent ED composition (i.e. ED composition or cook water already has been used to cook rotini previously, with a pH of about 2.5) for about 7 minutes. Rotini was then transferred into 4 parts of fresh boiling ED composition (with a pH of about 1.94) and cooked for an additional 7 minutes. After cooking, the rotini was drained and hot packed in a large (24" x 24") heat sealable plastic pouch. The resulting cooked rotini (pH 3.9-4.0) had excellent texture and flavor. It was judged organoleptically (n=7) to be absent of the sour taste found in conventionally lactic acid acidified control with comparable pH.

### EXAMPLE VII

This example demonstrates that a simple, effective, in-package, simultaneous acidification/ cooking/ pasteurization process using ED composition as an acidifying agent can be successfully carried out to produce high quality, shelf stable food products, particularly starch products such as pasta. ED composition (125 grams) having a temperature of about 95°C and pH of about 1.3 was added to 100 grams of dry rotini in a heat-stable plastic pouch. The pouch was sealed and heated in a boiling water bath for 12 minutes with frequent tumbling action to allow even distribution of ED water in the pouch thus even uniform hydration of the pasta.
Sealed bags were optionally cooled in cold tap water to room temperature (about 25° C). The resulting cooked rotini (pH 3.91) had excellent texture and flavor. It was judged organoleptically (n=7) to be absent of the sour taste found in a conventionally lactic acid acidified control with comparable pH. The in-package process works equally well using conventional acidulants (e.g. lactic acid). However, the products so processed has inferior quality (objectionable sour taste).

### EXAMPLE VIII

This example demonstrates that ED compositions can be used directly to completely or partially replace water in prepared or formulated food products such as gravies, sauces, dips, spreads, dressings, and the like to provide shelf stability under ambient storage conditions. The dry ingredients set forth below were blended in a plastic bag and then mixed with liquid. The mixtures were heated to greater than about 185°F for about 2 minutes and hot-filled into a heat stable plastic pouch. The filled pouch was allowed to cool to room temperature prior to measuring pH. The pHs of the control acidified with citric acid and the sample acidified with ED composition were 4.1 and 3.85, respectively.

| | With Citric Acid | With ED Composition |
|---|---|---|
| Starch, Col Flo 67 | 3.5 | 3.5 |
| Onion Powder | 0.5 | 0.5 |
| Chicken powder w/fat | 1.8 | 1.8 |
| Parsley | 0.04 | 0.04 |
| Pepper | 0.04 | 0.04 |
| Oregano | 0.10 | 0.10 |
| Salt | 1.0 | 1.0 |
| Sugar | 1.5 | 1.5 |
| Carmel powder | 0.02 | 0.02 |
| Citric acid | 0.20 | 0 |
| Soybean oil | 2.5 | 2.5 |
| Water | 88.81 | 4.01 |
| ED Water | 0 | 85.0 |

The samples were evaluated using an expert taste panel of 5. Results indicated that sample prepared with ED composition did not taste sour even at slightly lower pH than the control. The control was unacceptable to all panelists due to its extreme sourness.

## Claims

1. A method for acidifying a food product, the method comprising contacting food product with an amount of an electrodialyzed composition effective for lowering pH of the final product to 4.6 or less, the electrodialyzed composition having a total cation concentration of 1.0N or less, an individual cation concentration of 0.6N or less, a free chlorine content of 1 ppm or less, and a pH 4.5 or less.

2. The method of Claim 1 wherein the food product has a final product pH of less than 4.6, the method comprising contacting the food with a countercurrent stream of electrodialyzed composition having a temperature range of from 1 to 100°C for a total contact time of about 30 seconds or more, the electrodialyzed composition provided using membrane electrodialysis.

3. The method of Claim 1 or 2, wherein the electrodialyzed composition has a total cation concentration of 0.5N or less, an individual cation concentration of 0.3N or less, a free chlorine content of 1 ppm or less, and a pH of 4.5 or less.

4. The method of Claim 1, further comprising the steps of placing the acidified food product in a heat-stable, sealable container, sealing the container; thermally treating the food product in the sealed container at a temperature and for a time effective to pasteurize the food product; cooling the thermally treated food product to reduce the temperature to about 25°C or less to obtain a preserved food product.

5. The method as defined in Claim 4, wherein the container is a plastic pouch.

6. The method of Claim 1, wherein the food product is placed in a sealable, heat stable container prior to being contacted with the electrodialyzed composition, said method further comprising the steps of sealing the container; thermally treating the food product in the sealed container at a temperature and for a time effective to pasteurize the food product; cooling the thermally treated food product to rapidly reduce the temperature to 25°C or less to obtain the preserved food product.

7. The method of any one of Claims 1 to 6, wherein the food product is selected from the group consisting of vegetables, beans, meat, potato, rice, pasta, and mixtures thereof.

8. The method of Claim 1, wherein the food product is vegetables, which are pretreated in order to reduce an initial microbiological load and placed raw in a sealable, heat stable plastic pouch prior to being contacted with the electrodialyzed composition, said method further comprising the steps of sealing the container; thermally treating the vegetables in the sealed container at a temperature and for a time effective to pasteurize the vegetables; cooling the thermally treated vegetables to rapidly reduce the temperature to about 25°C or less to obtain the preserved vegetables.

9. The method as defined in Claim 8, wherein the vegetables are selected from the group consisting of carrots, peppers, broccoli, peas, pea-pods, cauliflower, onions, tomatoes, mushrooms, zucchini, corn, celery, asparagus, green beans, water chestnuts, and bamboo shoots.

10. The method of Claim 1 wherein the food product is a formulated food product which is acidified by including the electrodialyzed composition in the formulated food product by completely or partially replacing normal water in the formulated food product, sais method further comprising the steps of hot-filling the food product into a heat stable container or applying a heat treatment to the filled and sealed container sufficient to pasteurize the food product.

11. The method of Claim 1 or 10, wherein the food product is selected from the group consisting of beverages, desserts, dressings, sauces, gravies, dips, spreads, snacks, pasta and cereal/baked goods.

12. The method of Claim 1 wherein the food product includes at least one solid and one fluid component and either one or all components are pretreated with the electrodialyzed composition and the final combined preserved food products are then placed in a sealable, heat stable container which is then sealed, the method further comprising the steps of thermally treating the sealed at a temperature and for a time effective to pasteurize the combined food products; cooling the thermally treated food products to reduce the temperature to about 25°C or less to obtain preserved food products.

13. The method of Claim 12, wherein all components are first placed in a sealable, heat stable, heat sealable container and an amount of electrodialyzed composition is added sufficient to achieve a pH of 4.6 or less in preserved food products.

14. The method of Claim 12 or 13, wherein the solid components are selected from the group consisting of vegetables, beans, meat, potato, rice, pasta, and mixtures thereof.

15. The method of any one of Claims 12 to 14, wherein the fluid component is selected from the group consisting of syrups, toppings, dressings, sauces, gravies, dips, spreads, and the like.

16. The method of any one of Claims 12 to 15, wherein step (5) and (6) are replaced by directly placing the treated components into the container at a temperature of the components greater than 70°C.

17. The method of Claim 1 wherein the method is an in-package process and the food product is dry pasta which is combined with the electrodialyzed composition having a temperature of about 70°C or greater in a heat stable container; said method further comprising the steps of sealing the filled container; thermally treating the sealed container at a temperature of 70°C or greater; mixing for about 2 minutes or more, the mixing effective for providing a uniform distribution of the electrodialyzed composition in the pasta; cooling the thermally treated pasta to reduce the temperature to about 25°C or less to obtain the preserved pasta.

18. The method of Claim 17, wherein a ratio of dry pasta to electrodialyzed composition is 0.70 or greater.

19. The method of Claim 17 or 18, wherein a ratio of dry pasta to electrodialyzed composition is 0.80 or geater.

20. The method of any one of Claims 4 to 6, 8 to 10, or 12 to 19, wherein the electrodialyzed composition has a total cation concentration of 1.0N or less, an individual cation concentration of 0.6N or less than 0.6N, a free chlorine content of 1 ppm or less, and a pH of 4.5 or less.

21. The method of any one of Claims 1 to 20, wherein the electrodialyzed composition has a total cation concentration of 0.1N or less, an individual cation concentration of 0.04N or less, a free chlorine content of 1 ppm or less, and a pH of 3.5 or less.

## Patentansprüche

1. Verfahren zur Ansäuerung eines Nahrungsmittelprodukts, bei dem man das Nahrungsmittelprodukt mit einer zur pH-Absenkung des Endprodukts auf 4,6 oder weniger wirksamen Menge einer elektrodialysierten Zusammensetzung in Berührung bringt, wobei die elektrodialysierte Zusammensetzung eine Gesamtkationenkonzentration von 1,0 N oder weniger, eine Einzelkationenkonzentration von 0,6 N oder weniger, einen freien Chlorgehalt von 1 ppm oder weniger und einen pH von 4,5 oder weniger hat.

2. Verfahren des Anspruchs 1. bei dem das Nahrungsmittelprodukt einen Endprodukt-pH von weniger als 4,6 hat und man bei dem Verfahren das Nahrungsmittel für eine Gesamtkontaktzeit von etwa 30 Sekunden oder mehr mit einem Gegenstrom der elektrodialysierten Zusammensetzung mit einer Temperatur in dem Bereich von 1 bis 100°C in Berührung bringt, wobei man für die vorgesehene elektrodialysierte Zusammensetzung eine Membranelektrodialyse benutzt.

3. Verfahren des Anspruchs 1 oder 2, bei dem die elektrodialysierte Zusammensetzung eine Gesamtkationenkonzentration von 0,5 N oder weniger, eine Einzelkationenkonzentration von 0,3 N oder weniger, einen freien Chlorgehalt von 1 ppm oder weniger und einen pH von 4,5 oder weniger hat.

4. Verfahren des Anspruchs 1, ferner mit den Stufen des Einbringens des angesäuerten Nahrungsmittelprodukts in einen hitzebeständigen, abdichtbaren Behälter, der Abdichtung des Behälters, der thermischen Behandlung des Nahrungsmittelprodukts in dem abgedichteten Behälter bei einer zur Pasteurisierung des Nahrungsmittelprodukts wirksamen Temperatur und Zeitdauer und der Abkühlung des thermisch behandelten Nahrungsmittelprodukts zur Temperaturabsenkung auf etwa 25°C oder weniger, um ein konserviertes Nahrungsmittelprodukt zu erhalten.

5. Verfahren nach Anspruch 4, bei dem der Behälter ein Kunststoffbeutel ist.

6. Verfahren des Anspruchs 1, bei dem das Nahrungsmittelprodukt vor der Berührung mit der elektrodialysierten Zusammensetzung in einen abdichtbaren, hitzebeständigen Behälter eingebracht wird und das Verfahren ferner die Stufen der Abdichtung des Behälters, der thermischen Behandlung des Nahrungsmittelprodukts in dem abgedichteten Behälter bei einer zur Pasteurisierung des Nahrungsmittelprodukts wirksamen Temperatur und Zeitdauer und der Abkühlung des thermisch behandelten Nahrungsmittelprodukts zur schnellen Temperaturabsenkung auf 25°C oder weniger umfaßt, um das konservierte Nahrungsmittelprodukt zu erhalten.

7. Verfahren eines der Ansprüche 1 bis 6, bei dem das Nahrungsmittelprodukt aus der Gruppe ausgewählt wird, die aus Gemüse, Bohnen, Fleisch, Kartoffeln, Reis, Teigwaren und ihren Gemischen besteht.

8. Verfahren des Anspruchs 1, bei dem das Nahrungsmittelprodukt Gemüse ist, das zur Reduzierung der mikrobiologischen Anfangsbelastung vorbehandelt und roh in einen abdichtbaren, hitzebeständigen Kunststoffbeutel eingebracht wird, bevor es mit der elektrodialysierten Zusammensetzung in Berührung gebracht wird, wobei das Verfahren ferner die Stufen der Abdichtung des Behälters, der thermischen Behandlung des Gemüses in dem abgedichteten Behälter bei einer zur Pasteurisierung des Gemüses wirksamen Temperatur und Zeitdauer und der Abkühlung des thermisch behandelten Gemüses zur schnellen Temperaturabsenkung auf etwa 25°C oder weniger umfaßt, um das konservierte Gemüse zu erhalten.

9. Verfahren nach Anspruch 8, bei dem das Gemüse aus der Gruppe ausgewählt wird, die aus Karotten, Pfeffer, Brokkoli, Erbsen, Erbsenhülsen, Blumenkohl, Zwiebeln, Tomaten, Pilzen, Zucchini, Getreide, Sellerie, Spargel, grünen Bohnen, Edelkastanie und Bambussprossen besteht

10. Verfahren des Anspruchs 1, bei dem das Nahrungsmittelprodukt ein formuliertes Nahrungsmittelprodukt ist, das durch Einbringen der elektrodialysierten Zusammensetzung in das formulierte Nahrungsmittelprodukt durch vollständigen oder teilweisen Austausch von normalem Wasser in dem formulierten Nahrungsmittelprodukt angesäuert wird, wobei das Verfahren ferner die Stufen der Heißabfüllung des Nahrungsmittelprodukts in einen hitzebeständigen Behälter oder eine zur Pasteurisierung des Nahrungsmittelprodukts ausreichende Wärmebehandlung des befüllten und abgedichteten Behälters umfaßt.

11. Verfahren des Anspruchs 1 oder 10, bei dem das Nahrungsmittelprodukt aus der Gruppe ausgewählt wird, die aus Getränken, Desserts, kalten Soßen, Soßen, Bratensoßen, Tunken, Aufstrichen, Imbissen, Teigwaren und Getreide-/Backwaren besteht.

12. Verfahren des Anspruchs 1, bei dem das Nahrungsmittelprodukt wenigstens eine feste und eine flüssige Komponente enthält und eine oder alle Komponenten mit der elektrodialysierten Zusammensetzung vorbehandelt werden und die vereinigten konservierten Nahrungsmittelendprodukte dann in einen abdichtbaren, hitzebeständigen Behälter gebracht werden, der dann abgedichtet wird, wobei das Verfahren ferner die Stufen der thermischen Behandlung des abgedichteten Behälters bei einer zur Pasteurisierung der vereinigten Nahrungsmittelprodukte wirksamen Temperatur und Zeitdauer und der Abkühlung des thermisch behandelten Nahrungsmittelprodukts zur Temperaturabsenkung auf etwa 25°C oder weniger umfaßt, um konservierte Nahrungsmittelprodukte zu erhalten.

13. Verfahren des Anspruchs 12, bei dem zuerst alle Komponenten in einen abdichtbaren, hitzebeständigen, durch Hitze abdichtbaren Behälter gebracht werden und eine ausreichende Menge elektrodialysierte Zusammensetzung zugesetzt wird, um in den konservierten Nahrungsmittelprodukten einen pH von 4,6 oder weniger zu erreichen.

14. Verfahren des Anspruchs 12 oder 13, bei dem die festen Komponenten aus der Gruppe ausgewählt werden, die aus Gemüse, Bohnen, Fleisch, Kartoffeln, Reis, Teigwaren und ihren Gemischen besteht.

15. Verfahren eines der Ansprüche 12 bis 14, bei dem die flüssige Komponente aus der Gruppe ausgewählt wird, die aus Sirupen, Garnierungen, kalten Soßen, Soßen, Bratensoßen, Tunken, Aufstrichen und dergleichen besteht.

16. Verfahren eines der Ansprüche 12 bis 15, bei dem Stufe (5) und (6) **dadurch** ersetzt werden, dass man die behandelten Komponenten bei einer Temperatur der Komponenten von mehr als 70°C direkt in den Behälter bringt.

17. Verfahren des Anspruchs 1, bei dem das Verfahren ein Verfahren in Verpackung ist und das Nahrungsmittelprodukt trockener Teigware ist, die mit der elektrodialysierten Zusammensetzung mit einer Temperatur von etwa 70°C oder mehr in einem hitzebeständigen, durch Hitze abdichtbaren Behälter vereinigt wird, wobei das Verfahren ferner die Stufen enthält: Abdichtung des befüllten Behälters, thermische Behandlung des abgedichteten Behälters bei einer Temperatur von 70°C oder mehr, 2 Minuten oder längere Mischung, die die Schaffung einer gleichmäßigen Verteilung der elektrodialysierten Zusammensetzung in der Teigware bewirkt und Kühlung der thermisch behandelten Teigware zur Temperaturabsenkung auf etwa 25°C oder weniger, um die konservierte Teigware zu erhalten.

18. Verfahren des Anspruchs 17, bei dem das Verhältnis von trockener Teigware zu elektrodialysierter Zusammensetzung 0,70 oder größer ist.

19. Verfahren des Anspruchs 17 oder 18, bei dem das Verhältnis von trockener Teigware zu elektrodialysierter Zusammensetzung 0,80 oder größer ist.

20. Verfahren eines der Ansprüche 4 bis 6, 8 bis 10 oder 12 bis 19, bei dem die elektrodialysierte Zusammensetzung eine Gesamtkationenkonzentration von 1,0 N oder weniger, eine Einzelkationenkonzentration von 0,6 N oder weniger als 0,6 N, einen freien Chlorgehalt von 1 ppm oder weniger und einen pH von 4, 5 oder weniger hat.

21. Verfahren eines der Ansprüche 1 bis 20, bei dem die elektrodialysierte Zusammensetzung eine Gesamtkationenkonzentration von 0,1 N oder weniger, eine Einzelkationenkonzentration von 0,04 N oder weniger, einen freien Chlorgehalt von 1 ppm oder weniger und einen pH von 3,5 oder weniger hat.

## Revendications

1. Procédé d'acidification d'un produit alimentaire, le procédé comprenant la mise en contact du produit alimentaire avec une certaine quantité d'une composition électro-dialysée efficace pour abaisser le pH du produit final jusqu'à 4,6 ou moins, la composition électro-dialysée ayant une concentration totale en cations de 1,0N ou moins, une concentration individuelle en cations de 0,6N ou moins, une teneur en chlore libre de 1 ppm ou moins et un pH de 4,5 ou moins.

2. Procédé selon la revendication 1, dans lequel le produit alimentaire a un pH de produit final inférieur à 4,6, le procédé comprenant la mise en contact de l'aliment avec un courant à contre-courant de composition électro-dialysée ayant une température dans la plage de 1 à 100°C pendant un temps de contact total d'environ 30 secondes ou plus, la composition électro-dialysée étant fournie par électrodialyse sur membrane.

3. Procédé selon la revendication 1 ou 2, dans lequel la composition électro-dialysée a une concentration totale en cations de 0,5N ou moins, une concentration individuelle en cations de 0,3N ou moins, une teneur en chlore libre de 1 ppm ou moins et un pH de 4,5 ou moins.

4. Procédé selon la revendication 1, comprenant en outre l'étape de mise du produit alimentaire acidifié dans un récipient stable thermiquement susceptible d'être scellé ; le scellement du récipient ; le traitement thermique du produit alimentaire dans le récipient scellé à une température et pendant un temps efficaces pour pasteuriser le produit alimentaire ; le refroidissement du produit alimentaire traité thermiquement pour réduire la température jusqu'à environ 25°C ou moins pour donner un produit alimentaire conservé.

5. Procédé selon la revendication 4, dans lequel le récipient est une poche en plastique.

6. Procédé selon la revendication 1, dans lequel le produit alimentaire est placé dans un récipient stable thermiquement, susceptible d'être scellé avant d'être mis en contact avec la composition électro-dialysée, ledit procédé comprenant en outre les étapes consistant à sceller le récipient ; à traiter thermiquement le produit alimentaire dans le récipient scellé à une température et pendant un temps efficaces pour pasteuriser le produit alimentaire ; à refroidir le produit alimentaire traité thermiquement pour réduire rapidement la température jusqu'à environ 25°C ou moins pour donner le produit alimentaire conservé.

7. Procédé selon l'une quelconque des revendications 1 à 6, dans lequel le produit alimentaire est choisi dans le groupe constitué par les légumes, les haricots, la viande, les pommes de terre, le riz, les pâtes et les mélanges de ceux-ci.

8. Procédé selon la revendication 1, dans lequel le produit alimentaire est un légume, qui est prétraité afin de réduire la charge microbiologique initiale et qui est placé cru dans une poche en plastique stable thermiquement, susceptible d'être scellé, avant d'être mis en contact avec la composition électro-dialysée, ledit procédé comprenant en outre les étapes consistant à sceller le récipient ; à traiter thermiquement le légume dans le récipient scellé à une température et pendant un temps efficaces pour pasteuriser le légume ; à refroidir le légume traité thermiquement pour réduire rapidement la température jusqu'à environ 25°C ou moins pour donner le légume conservé.

9. Procédé selon la revendication 8, dans lequel le légume est choisi dans le groupe constitué par les carottes, les poivrons, les brocolis, les petits pois, les gousses de pois, le chou-fleur, les oignons, les tomates, les champignons, les courgettes, le blé, le céleri, l'asperge, les haricots verts, les châtaignes d'eau et les pouces de bambou.

10. Procédé selon la revendication 1, dans lequel le produit alimentaire est un produit alimentaire formulé qui est acidifié par incorporation de la composition électro-dialysée dans le produit alimentaire formulé par remplacement total ou partiel de l'eau normale dans le produit alimentaire formulé, ledit procédé comprenant en outre les étapes de remplissage à chaud en produit alimentaire d'un récipient stable thermiquement ou d'application d'un traitement thermique au récipient rempli et scellé de façon suffisante pour pasteuriser le produit alimentaire.

11. Procédé selon la revendication 1 ou 10, dans lequel le produit alimentaire est choisi dans le groupe constitué par les boissons, les déserts, les assaisonnements, les sauces, les jus de viande, les solutions de trempe, les produits à tartiner, les encas, les pâtes et les céréales/aliments cuits.

12. Procédé selon la revendication 1, dans lequel le produit alimentaire comprend au moins un composant solide et un composant fluide et l'un des deux ou les deux composants sont prétraités avec une composition électro-dialysée et les produits alimentaires conservés combinés finaux sont ensuite placés dans un récipient stable thermiquement, susceptible d'être scellé, qui est ensuite scellé, le procédé comprenant en outre les étapes consistant à traiter thermiquement le récipient scellé à une température et pendant un temps efficaces pour pasteuriser les produits alimentaires combinés ; à refroidir les produits alimentaires traités thermiquement pour réduire rapidement la température jusqu'à environ 25°C ou moins pour donner les produits alimentaires conservés.

13. Procédé selon la revendication 12, dans lequel tous les composants sont d'abord placés dans un récipient stable thermiquement, susceptible d'être scellé thermiquement et une certaine quantité suffisante de composition électro-dialysée est ajoutée pour atteindre un pH de 4,6 ou moins dans les produits alimentaires conservés.

14. Procédé selon la revendication 12 ou 13, dans lequel les composants solides sont choisis dans le groupe constitué par les légumes, les haricots, la viande, les pommes de terre, le riz, les pâtes et les mélanges de ceux-ci.

15. Procédé selon l'une quelconque des revendications 12 à 14, dans lequel le composant fluide est choisi dans le groupe constitué par les sirops, les garnitures, les assaisonnements, les sauces, les jus de viande, les solutions de trempe, les produits à tartiner, et analogues.

16. Procédé selon l'une quelconque des revendications 12 à 15, dans lequel les étapes (5) et (6) sont remplacées par le fait de placer directement les composants traités dans le récipient à une température des composants supérieure à 70°C.

17. Procédé selon la revendication 1, dans lequel le procédé est un procédé d'emballage et le produit alimentaire est constitué de pâtes sèches qui sont combinées avec la composition électro-dialysée ayant une température d'environ 70°C ou plus dans un récipient stable thermiquement, susceptible d'être scellé, ledit procédé comprenant en outre les étapes consistant à sceller le récipient rempli ; à traiter thermiquement le récipient scellé à une température de 70°C ou plus ; à le mélanger pendant environ 2 minutes ou plus, le mélange étant efficace pour fournir une répartition uniforme de la composition électro-dialysée dans les pâtes ; à refroidir les pâtes traitées thermiquement pour réduire la température jusqu'à environ 25°C ou moins pour donner les pâtes conservées.

18. Procédé selon la revendication 17, dans lequel le rapport des pâtes sèches à la composition électro-dialysée est de 0,70 ou plus.

19. Procédé selon la revendication 17 ou 18, dans lequel le rapport des pâtes sèches à la composition électro-dialysée est de 0,80 ou plus.

20. Procédé selon l'une quelconque des revendications 4 à 6, 8 à 10 ou 12 à 19, dans lequel la composition électro-dialysée a une concentration totale en cations de 1,0N ou moins, une concentration individuelle en cations de 0,6N ou moins, une teneur en chlore libre de 1 ppm ou moins et un pH de 4,5 ou moins.

21. Procédé selon l'une quelconque des revendications 1 à 20, dans lequel la composition électro-dialysée a une concentration totale en cations de 1 ,0N ou moins, une concentration individuelle en cations de 0,04N ou moins, une teneur en chlore libre de 1 ppm ou moins et un pH de 3,5 ou moins.
